# EUROPEAN PATENT SPECIFICATION

(11) **EP 4 258 597 B1**
(45) Date of publication and mention of the grant of the patent: **03.06.2026**
(21) Application number: 21899984.5
(22) Date of filing: 30.11.2021
(51) Int. Cl.: H04L 69/22, H04L 9/40

(54) **PACKET PROCESSING METHOD, DEVICE, SYSTEM, AND STORAGE MEDIUM**
PAKETVERARBEITUNGSVERFAHREN, VORRICHTUNG, SYSTEM UND SPEICHERMEDIUM
PROCÉDÉ DE TRAITEMENT DE PAQUETS, DISPOSITIF, SYSTÈME, ET SUPPORT DE STOCKAGE

(30) Priority: 01.12.2020 CN 202011388416
(43) Date of publication of application: 11.10.2023
(73) Proprietor: ALIBABA GROUP HOLDING LIMITED, George Town, Grand Cayman (KY)
(72) Inventor: LYU, Yilong, Hangzhou, Zhejiang 311121 (CN)
(74) Representative: Finnegan Europe LLP
(86) International application number: PCT/CN2021/134251
(87) International publication number: WO 2022/116953

(56) References cited:
- CN-A- 107 547 417
- CN-A- 109 936 513
- US-A1- 2001 053 148
- US-A1- 2006 203 721
- US-A1- 2012 023 231
- US-A1- 2014 241 362

## Description

### TECHNICAL FIELD

The present application relates to the technical field of communications, in particular, to a method, a device, a system, and a storage medium for message processing.

### BACKGROUND

In recent years, as network function virtualization (NFV) applications increase, requirements of user transactions for performance are increasing, and 100G network interface cards are gradually popular. With the continuous improvement of the performance and bandwidth of a network interface card, software forwarding has been unable to meet growing network needs. In order to improve network forwarding performance of a physical machine, a smart Network Interface Card (NIC) comes into being.

In the prior art, by offloading some or all functions of a host to a network interface card and using a Central Processing Unit (CPU) of the NIC for network forwarding, the forwarding performance is low. CN107547417A relates to a message processing method.

### SUMMARY OF THE INVENTION

Multiple aspects of the present application provide a method, a device, a system, and a storage medium for message processing, as defined in the independent claims, which are configured to improve network forwarding performance.

An embodiment of the present application provides a message processing system, including: a central processing unit and a programmable device, wherein the programmable device is communicatively coupled to the central processing unit; the programmable device is configured to provide a message header of an acquired to-be-processed message for the central processing unit; the central processing unit is configured to process the message header to obtain a target message header, and provide the target message header for the programmable device; and the programmable device is also configured to splice the target message header with a payload portion of the to-be-processed message to obtain a target message, and forward the target message to a target node referred to in the target message header.

An embodiment of the present application further provides a data processing system, including a plurality of physical devices deployed in a specified physical space, wherein the plurality of physical devices are communicatively coupled; a first physical device is configured to acquire to-be-processed data, and provide at least part of the data in the to-be-processed data for other physical devices; the other physical devices are configured to process the at least part of the data to obtain a data processing result, and provide the data processing result for the first physical device; and the first physical device is configured to determine a working mode according to the data processing result.

An embodiment of the present application further provides a message processing method, applicable to a programmable device and including: acquiring a to-be-processed message; providing a message header of the to-be-processed message for a central processing unit communicatively coupled to the programmable device, so that the central processing unit processes the message header to obtain a target message header and returns same; splicing the target message header with a payload portion of the to-be-processed message, so as to obtain a target message; and forwarding the target message to a target node referred to in the target message header.

An embodiment of the present application further provides a message processing method, applicable to a central processing unit and including: acquiring a message header of a to-be-processed message provided by a programmable device communicatively coupled to the central processing unit; processing the message header to obtain a target message header; and providing the target message header for the programmable device, so that the programmable device splices the target message header with a payload portion of the to-be-processed message to obtain a target message, and forwards the same.

An embodiment of the present application further provides a network device, including a programmable device, wherein the programmable device is communicatively coupled to a central processing unit; and the programmable device is configured to perform the steps in the foregoing message processing method implemented by the programmable device.

An embodiment of the present application further provides a network device, including a memory and a central processing unit, wherein the memory is configured to store a computer program; the central processing unit can be communicatively coupled to the programmable device; and the central processing unit is coupled to the memory, and is configured to execute the computer program to perform the steps in the foregoing message processing method implemented by the central processing unit.

An embodiment of the present invention further provides a computer-readable storage medium that stores computer instructions which, when executed by one or more processors, cause the one or more processors to perform the steps in all the above message processing methods.

In the embodiments of the present application, a programmable device provides a message header of a to-be-processed message for a central processing unit (CPU) for processing, and splices the message header processed by the CPU with a payload portion of the to-be-processed message to obtain a target message, so that the payload portion of the message is processed using high performance of hardware of the programmable device, and the message header can be processed using flexibility of software in the CPU to process a complicated transaction logic. Since the message header is relatively short, performance loss in CPU software processing due to long-message copy processing will not occur, thus facilitating improvement of the network forwarding performance.

### BRIEF DESCRIPTION OF THE DRAWINGS

The accompanying drawings described here are used to provide a further understanding of the present application and form a part of the present application. The schematic embodiments and descriptions of the present application are used to explain the present disclosure and do not constitute an improper limitation on the present application. In the accompanying drawings:
**FIG. 1a** is a schematic structural diagram of a message processing system provided by an embodiment of the present application;
**FIG. 1b** is a structural schematic diagram of a network interface card provided by the embodiments of the present disclosure;
**FIG. 1c** and **FIG. 1d** are schematic diagrams of a message processing process provided by an embodiment of the present application;
**FIG. 1e** is a schematic diagram of a process for processing, by a network interface card, a message sent by a host provided by an embodiment of the present application;
**FIG. 1f** is a schematic diagram of a process for processing, by a network interface card, a message received by a host provided by an embodiment of the present application;
**FIG. 2a** is a schematic structural diagram of a network device provided by an embodiment of the present application;
**FIG. 2b** is a schematic structural diagram of a computer device provided by an embodiment of the present application;
**FIG. 2c** is a schematic structural diagram of another network device provided by an embodiment of the present application;
**FIG. 3** and **FIG. 4** are flow diagrams of a message processing method provided by an embodiment of the present application; and
**FIG. 5** is a schematic structural diagram of a data processing system provided by an embodiment of the present application.

### DETAILED DESCRIPTION

For the purpose of making objectives, technical solutions and advantages of the present application clearer, clear and complete description will be made below to the technical solutions of the present application in conjunction with specific embodiments and corresponding drawings of the present application. Obviously, the described embodiments are merely a part of the embodiments of the present application and not all the embodiments. Based on the embodiments in the present application, all other embodiments obtained by those of ordinary skill in the art without creative work all may fall within the protection scope of the present application as defined by the claims.

For a technical problem of relatively low network forwarding performance of an existing hardware offload scheme. In some embodiments of the present application, a programmable device provides a message header of a to-be-processed message for a CPU for processing, and splices the message header processed by the CPU with a payload portion of the to-be-processed message to obtain a target message, so that the payload portion of the message is processed using high performance of hardware of the programmable device, and the message header can be processed using flexibility of software in the CPU to process a complicated transaction logic. Since the message header is relatively short, performance loss in CPU software processing due to long-message copy processing will not occur, thus facilitating improvement of the network forwarding performance.

The technical solutions disclosed by all the embodiments of the present application are described in detail below in conjunction with the accompanying drawings.

It should be noted that identical reference signs indicate identical objects in the following drawings and embodiments. Therefore, once a certain object is defined in one drawing or embodiment, it is unnecessary to further define and explain it in the subsequent drawings and embodiments.

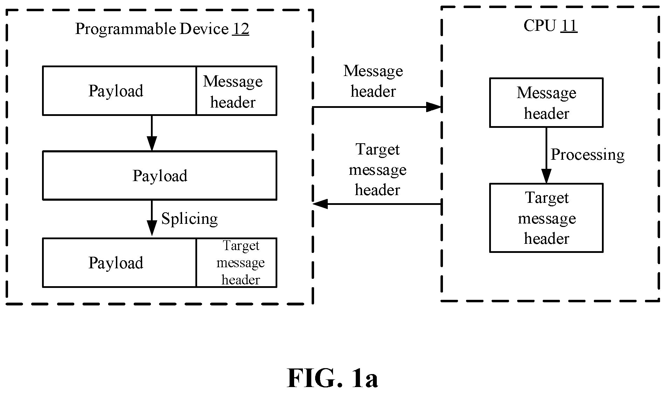

**FIG. 1a** is a schematic structural diagram of a message processing system provided by an embodiment of the present application; As shown in **FIG. 1a****,** the system includes CPU 11 and programmable device 12. CPU 11 and programmable device 12 are communicatively coupled. Optionally, CPU 11 and programmable device 12 can be communicatively coupled by a data bus. The data bus can be a serial interface data bus, such as a PCIe serial interface, a USB serial interface, an RS485 interface or an RS232 interface, but not limited to this.

In this embodiment, CPU 11 may be an independent chip, a CPU integrated in a System on Chip (SoC), a CPU integrated in a Microcontroller Unit (MCU), or the like.

Programmable device 12 refers to a hardware processing unit that uses a hardware description language (HDL) for data processing. The HDL may be VHDL, Verilog HDL, System Verilog, System Clike. Programmable device 12 may be a Field-Programmable Gate Array (FPGA), a Programmable Array Logic (PAL), a General Array Logic (GAL), a Complex Programmable Logic Device (CPLD), etc. Alternatively, the programmable device may also be an Application Specific Integrated Circuit (ASIC).

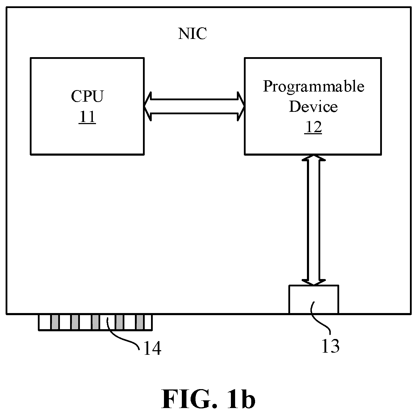

In this embodiment of the present application, CPU 11 and programmable device 12 may be deployed in the same network device or in different network devices. For example, CPU 11 and programmable device 12 may be deployed in a Network Interface Card (NIC) (as shown in **FIG. 1b**), or CPU 11 and programmable device 12 may also be deployed in a gateway or a router.

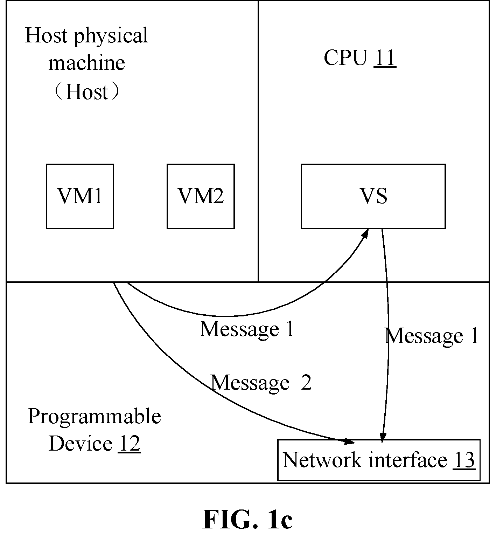

When CPU 11 and programmable device 12 are deployed in different network devices, programmable device 12 may be deployed in the NIC, and CPU 11 may be deployed in a host. The NIC may be installed on the host. Optionally, as shown in **FIG. 1b****,** the NIC may be provided with bus interface 14, and is installed on the host through bus interface 14. The bus interface may be a serial bus interface, such as a PCIe serial interface, a USB serial interface, an RS485 interface or an RS232 interface, but not limited to this. In some embodiments, as shown in **FIG. 1c****,** a first packet (such as message 1) of network forwarding traffic does not have a forwarded flow table for processing this data stream in programmable device 12. A flow table refers to an abstraction of a data forwarding function of a network device. Entries in a flow table integrate network configuration information at all layers of a network, so that richer rules can be used during data forwarding. Each flow table entry of a flow table includes three parts: header fields for data packet matching, counters for counting the number of matched data packets, and actions for showing how to process the matched data packets. Therefore, message 1 will be sent to CPU 11 for processing. CPU 11 processes message 1, generates a flow table for processing message 1, and sends the flow table to programmable device 12. In this way, subsequent messages (such as message 2) can hit the forwarded flow table on programmable device 12, which will be processed by programmable device 12 and forwarded by programmable device 12. For an NIC, programmable device 12 in the NIC may forward to network interface 13 of the NIC.

In this embodiment, a communication component in network interface 13 is configured to facilitate wired or wireless communication between a device where communication component is located and other devices. The device where the communication component is located may access a wireless network based on a communication standard, such as Wi-Fi, 2G or 3G, 4G or 5G, or a combination thereof. In one exemplary example, the communication component receives a broadcast signal or broadcast related information from an external broadcast management system via a broadcast channel. In one exemplary embodiment, the communication component can also be implemented based on a near-field communication (NFC) technology, a radio frequency identification (RFID) technology, an infrared data association (IrDA) technology, an ultra-wideband (UWB) technology, a Bluetooth (BT) technology or other technologies.

In the above implementation, CPU 11 processes a first packet of a data stream. The software processing flexibility is high, but the processing performance is poor. Especially when a long message is processed, the software processing performance is seriously affected due to a need for multiple copies of an internal memory of the CPU. On the other hand, programmable device 12 processes subsequent messages of the data stream, which can achieve hardware acceleration. However, this scheme also brings a limitation to the flexibility. Since hardware cannot be modified as often as software, and a development iteration cycle of hardware is much longer than that of software, it is difficult to meet a rapid iteration requirement of a cloud network. In addition, due to resource limitation, it is difficult for hardware to meet a continuous increase of functions of the cloud network.

In order to solve the above problems and take into account the flexibility and high performance of message processing, embodiments of the present application provide a message processing manner combining software and hardware, that is, a network hardware offload scheme. A specific implementation process is as follows:

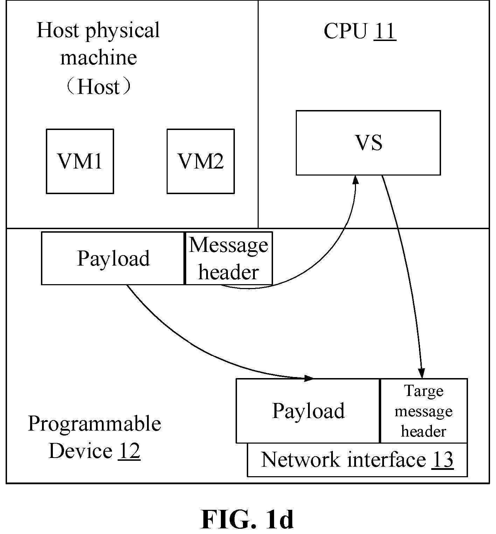

As shown in **FIG. 1a** and **FIG. 1d****,** for a to-be-processed message, programmable device 12 may provide a message header of the to-be-processed message for CPU 11. Optionally, programmable device 12 may provide the message header of the to-be-processed message for CPU 11 when no flow table for processing the to-be-processed message exists locally. In this embodiment, LOCAL refers to a storage unit of programmable device 12.

The to-be-processed message refers to a message acquired by programmable device 12. This message may be a message sent by a network device where programmable device 12 is located to other physical machines, or a message sent by other physical machines and received by a network device where programmable device 12 is located.

In this embodiment, processing a message mainly refers to forwarding a message. In a message forwarding process, the message header needs to be processed according to actual needs. The processing of the message header may include one or multiple of modifying a source address and a destination address in the message header; performing safety verification by using information in the message header; and looking up a routing table by using the information in the message header, which is not limited here. The multiple means two or more.

CPU 11 may receive the message header provided by programmable device 12. In this embodiment, CPU 11 may process the message header to obtain a target message header. Optionally, Virtual Switch (VS) may run in CPU 11. The VS running in CPU 11 processes the message header to obtain the target message header. Further, CPU 11 may provide the target message header for programmable device 12. CPU 11 may process the message header according to actual needs. A processing manner may refer to the above content.

Correspondingly, programmable device 12 may receive the target message header and splice the target message header with a payload portion of the to-be-processed message to obtain a target message. Further, programmable device 12 may forward the target message to a target node referred to in the target message header.

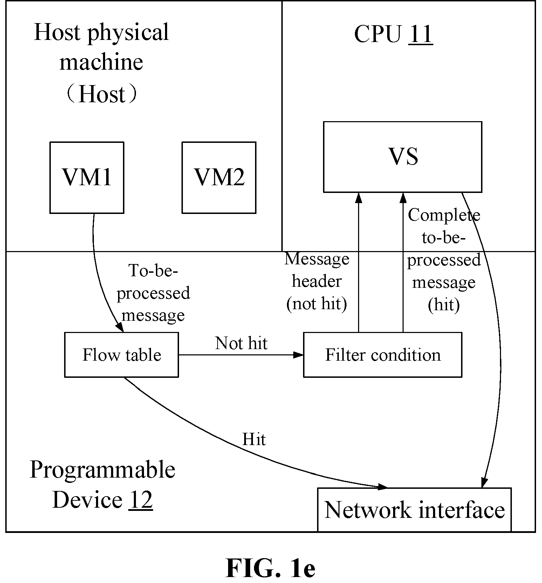

As shown in **FIG. 1e****,** programmable device 12 may be a programmable device in the NIC. If the to-be-processed message is a message sent, to other physical machines, by a host where a smart NIC is located, programmable device 12 may send the target message to network interface 13 and forward the target message to other physical machines through network interface 13. In this implementation, the target node is another physical machine.

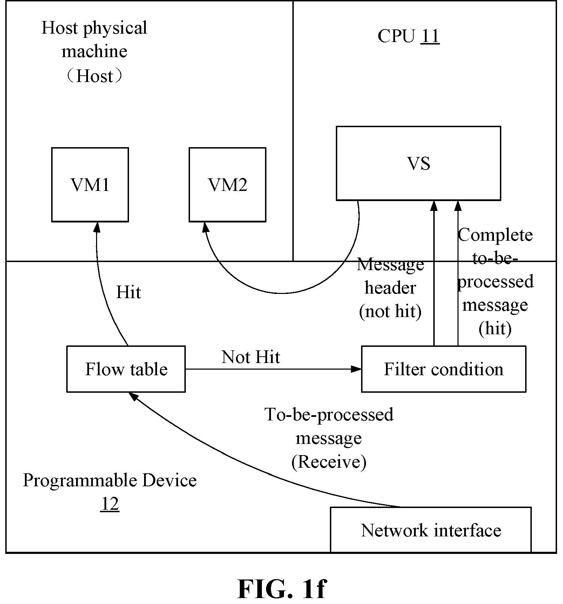

As shown in **FIG. 1f****,** programmable device 12 may be a programmable device in the NIC. If the to-be-processed message is a message sent by other physical machines and received by the host where the smart NIC is located, that is, if the to-be-processed message is a message sent by other physical machines to the host where the smart NIC is located and received by network interface 13, programmable device 12 may send the target message to a virtual machine (VM) running in the host.

In the message processing system provided by this embodiment, a programmable device can provide a message header of a to-be-processed message for a CPU for processing, and splice the message header processed by the CPU with a payload portion of the to-be-processed message to obtain a target message, so that the payload portion of the message is processed using high performance of hardware of the programmable device, and the message header can be processed using flexibility of software in the CPU to process a complicated transaction logic. Since the message header is relatively short, for example, 256 bytes, performance loss in CPU software processing due to long-message copy processing will not occur, thus facilitating improvement of network forwarding performance. For example, since the message header is processed by the software VS in the CPU only in this embodiment, a network forwarding performance may be tens of millions of pps and have a bandwidth of 100G. pps refers to a quantity of messages forwarded per second.

On the other hand, the CPU processes the message header. Since software has a relatively short development cycle, it helps to meet a requirement for message forwarding flexibility and can meet the rapid iteration requirement of the cloud network.

In this embodiment of the present application, CPU 11 may also generate, after or during the processing of the header of the to-be-processed message, a flow table for processing the header of the to-be-processed message. Optionally, CPU 11 may invoke an ovs_flow_cmd_new function that creates a flow table, to generate the flow table for processing the header of the to-be-processed message. The structure of the flow table can be seen in the relevant contents of the above embodiment, and will not be repeated here. Further, CPU 11 may provide the flow table for processing the message header of the to-be-processed message for programmable device 12.

Correspondingly, programmable device 12 may receive the flow table for processing the message header of the to-be-processed message and store the flow table locally. In this way, when subsequently receiving other messages belonging to the same data stream as the to-be-processed message, programmable device 12 may directly process other messages, thereby realizing hardware offload of message forwarding, and improving the network forwarding performance.

A message belonging to the same data stream as the to-be-processed message refers to a message with the same data stream identifier as that of the to-be-processed message. the data stream identifier may be five-tuple information of the message header. Five tuples include: a source IP address, a source port, a destination IP address, a destination port and a transport layer protocol.

Based on this, as shown in **FIG. 1e** and **FIG. 1f****,** programmable device 12 may acquire the data stream identifier in the message header of the to-be-processed message when determining whether a flow table for processing the to-be-processed message exists locally; match the data stream identifier with locally stored flow tables; if the data stream identifier in the message header of the to-be-processed message does not exist in the locally stored flow tables, determine that no flow table for processing the to-be-processed message exists locally; if the locally stored flow tables include a flow table that matches the data stream identifier in the message header of the to-be-processed message, take the matched flow table as a target flow table; and process the to-be-processed message according to a processing manner recorded by a flow table entry of the target flow table, so as to obtain a target message. Further, programmable device 12 may forward the to-be-processed message to a target node referred to in the target message header.

In some embodiments, as shown in **FIG. 1e** and **FIG. 1f****,** programmable device 12 also stores a filter condition at which the complete message needs to be provided for CPU 11 for processing. The filter condition may include: the data stream identifier of the message that needs to be completely provided for CPU 11, one or more of the five tuples, a destination network address and a source network address. Optionally, the destination network address may be represented by a destination **IP** address and a subnet mask, and the source network address may be represented by a source **IP** address and a subnet mask. For example, if the source network address may be expressed as XXX.XXX.0.0/16, and correspondingly, if previous 16 bits of the source **IP** address of the to-be-processed message are the same as previous 16 bits of the source **IP** address in the filter condition, it is determined that the complete to-be-processed message needs to be provided for CPU 11.

Correspondingly, programmable device 12 may determine, on the basis of the data stream identifier in the message header of the to-be-processed message and the filter condition when no flow table for processing the to-be-processed message exists locally, whether it is needed to provide the complete to-be-processed message for CPU 11. Optionally, if the filter condition include: a destination network address and a source network address, programmable device 12 may parse the message header of the to-be-processed message to obtain the destination IP address and source IP address; acquire the destination network address and source network address of the to-be-processed message from the destination IP address and source IP address; match the destination network address and source network address of the to-be-processed message with the destination network address and source network address in the filter conditions; and if matching succeeds, determine that the complete to-be-processed message needs to be provided for CPU 11. Further, programmable device 12 may provide the complete to-be-processed message for CPU 11 for processing.

Correspondingly, if a determination result is that the complete to-be-processed message does not need to be provided for CPU 11, programmable device 12 may provide the message header of the to-be-processed message for CPU 11, and CPU 11 processes the message header of the to-be-processed message.

In some embodiments of the present application, different message processing manners can be used for messages with different transaction information. For example, according to requirements of different transaction information on a message processing rate, a message processing manner that meets the requirement on the message processing rate can be used for processing. The transaction information may include a transaction user and a transaction type. Optionally, the message processing manners include at least two of the above manners: processing by CPU 11 and programmable device 12, processing by programmable device 12 only, and processing by CPU 11 only.

Correspondingly, programmable device 12 may acquire transaction information of the to-be-processed message. Optionally, the transaction information of the to-be-processed message may be extracted from information of the to-be-processed message header. Further, a processing manner of the to-be-processed message may be determined according to the transaction information of the to-be-processed message. If the to-be-processed message is processed by CPU 11 and programmable device 12, programmable device 12 may provide the message header of the to-be-processed message for CPU 11. For the specific implementation in which CPU 11 processes the message header to obtain a target message header, and programmable device 12 splices the target message header with a payload portion of the to-be-processed message, a reference will be made to the relevant contents of the above embodiment, which will not be repeated here.

In practical applications, the transaction information of a message includes a transaction type to which the message belongs, and information of a user sending or receiving the message. Transaction types required by a message may include, but are not limited to, a video transaction, an email transaction, a Web transaction, an instant messaging transaction, and the like. Different transactions have different requirements for bandwidths, jitter, delays, and the like, so they have different processing rates on the to-be-processed message. Based on this, the transaction type of the to-be-processed message may be acquired from the transaction information of the to-be-processed message; and a target service grade corresponding to the transaction type of the to-be-processed message may be determined. The service grade can be determined according to a requirement of the transaction type on the message processing rate. The transaction types that require the same or similar message processing rate belong to the same service grade. Further, a corresponding relationship between a transaction type and a service grade can be preset. Correspondingly, the transaction type of the to-be-processed message may be matched in the corresponding relationship between the transaction type and the service grade, so as to determine a target service grade corresponding to the transaction type of the to-be-processed message.

Further, programmable device 12 may acquire a message processing manner corresponding to the target service grade as a processing manner of the to-be-processed message. Optionally, a corresponding relationship between a service grade and a message processing manner may be preset. Correspondingly, the target service grade may be matched in the corresponding relationship between the service grade and the message processing manner, so as to determine the message processing manner corresponding to the target service grade.

In other embodiments, different message forwarding rates may be provided for different users. For example, higher message processing efficiency is provided for users with a higher network cost. Lower message processing efficiency is provided for users with a lower network cost. Based on this, programmable device 12 may acquire a transaction user identifier from the transaction information of the to-be-processed message. Optionally, the transaction user identifier may be address information of a user terminal. The address information of the user terminal may include a media access control (MAC) address and/or an intellectual property (IP) address of the terminal.

Further, programmable device 12 may acquire a message processing manner corresponding to the transaction user identifier as a processing manner of the to-be-processed message. Optionally, a corresponding relationship between a user identifier and a message processing manner may be preset. Correspondingly, the transaction user identifier of the to-be-processed message may be matched in the corresponding relationship between the transaction user identifier and the message processing manner, so as to determine a target service grade corresponding to the transaction type of the to-be-processed message.

In other embodiments, it is necessary to simultaneously classify transaction types and users to classify the message processing manners, and programmable device 12 may use a combination of the above two manners to determine the processing manner of the to-be-processed message.

It is worth noting that the above message processing system provided by this embodiment of the present application can be deployed in the same network device or in different network devices. When the above CPU and programmable device are deployed in the same network device, the network device can be an NIC, a gateway or a router. The following is an exemplary description of the network device provided by this embodiment of the present application.

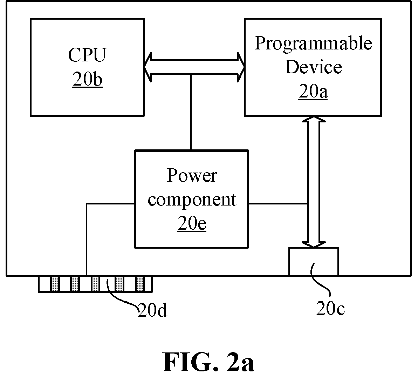

**FIG. 2a** is a schematic structural diagram of a network device provided by an embodiment of the present application. As shown in FIG. 2a, the network device provided by this embodiment of the present application includes a programmable device 20a. Programmable device 20a may be communicatively coupled to a CPU. A connection manner may be seen in the relevant contents of the above system embodiments, which will not be repeated here. Optionally, the network device may also include a CPU 20b. Programmable device 20a may be communicatively coupled to CPU 20b. Of course, programmable device 20a may also be in communication with CPUs in other physical machines. For example, if the network device is an NIC, programmable device 20a in the NIC may also be communicatively coupled to a CPU of a host of the NIC.

In this embodiment, in order to take into account the flexibility and high performance of message processing, embodiments of the present application provide a message processing manner combining software and hardware, that is, a network hardware offload scheme. A specific implementation process is as follows:

For a to-be-processed message, programmable device 20a may provide a message header of the to-be-processed message for the CPU communicatively coupled to programmable device. Optionally, programmable device 20a may provide, when no flow table for processing the to-be-processed message exists locally, the message header of the to-be-processed message for the CPU communicatively coupled to programmable device 20a. In this embodiment, LOCAL refers to a storage unit of programmable device 20a.

The to-be-processed message refers to a message received by programmable device 20a. This message may be a message sent by the network device to other physical machines, or a message sent by other physical machines and received by the network device.

The CPU communicatively coupled to programmable device 20a may receive the message header provided by the programmable device. In this embodiment, the CPU may process the message header to obtain a target message header. Optionally, a VS may run in the CPU. The VS running in the CPU processes the message header to obtain the target message header. Further, CPU may provide the target message header for programmable device 20a. Correspondingly, programmable device 20a may receive the target message header and splice the target message header with a payload portion of the to-be-processed message to obtain a target message. Further, programmable device 20a may forward the target message to a target node referred to in the target message header.

If the to-be-processed message is a message sent by the network device to other physical machines, the programmable device may send the target message to network interface 20c and forward the target message to other physical machines through network interface 20c. In this embodiment, the target node is another physical machine.

If the message to be processed is a message sent by other physical machines received by the network equipment, that is, the message to be processed is a message sent to the network equipment by other physical machines received by the network interface 20c, then the programmable device can send the target message to a virtual machine (VM) running on the network device.

In the network device provided by this embodiment, the programmable device of the network device can provide the message header of the to-be-processed message for the CPU communicatively coupled to the programmable device for processing, and splice the message header processed by the CPU with the payload portion of the to-be-processed message to obtain the target message, so that the payload portion of the message is processed using high performance of hardware of the programmable device, and the message header can be processed using flexibility of software in the CPU to process a complicated transaction logic. Since the message header is relatively short, for example, 256 bytes, performance loss in CPU software processing due to long-message copy processing will not occur, thus facilitating improvement of network forwarding performance.

On the other hand, the CPU processes the message headers. Due to the short software development cycle, it helps to meet the requirements for the flexibility of message forwarding and the rapid iteration requirements of the cloud network.

In this embodiment of the present application, the CPU may also generate, after or during the processing of the header of the to-be-processed message, a flow table for processing the header of the to-be-processed message. Further, the CPU may provide the flow table for processing the message header of the to-be-processed message for the programmable device.

Correspondingly, programmable device 20a may receive the flow table for processing the message header of the to-be-processed message and store the flow table locally. In this way, when subsequently receiving other messages belonging to the same data stream as the to-be-processed message, the programmable device may directly process other messages, thereby realizing hardware offload of message forwarding, and improving the network forwarding performance.

A message belonging to the same data stream as the to-be-processed message refers to a message with the same data stream identifier as that of the to-be-processed message. the data stream identifier may be five-tuple information of the message header. Five-tuple includes: a source IP address, a source port, a destination IP address, a destination port and a transport layer protocol.

Based on this, programmable device 20a may acquire the data stream identifier in the message header of the to-be-processed message when determining whether a flow table for processing the to-be-processed message exists locally; match the data stream identifier with locally stored flow tables; if the data stream identifier in the message header of the to-be-processed message does not exist in the locally stored flow tables, determine that no flow table for processing the to-be-processed message exists locally; if the locally stored flow tables include a flow table that matches the data stream identifier in the message header of the to-be-processed message, take the matching flow table as a target flow table; and process the to-be-processed message according to a processing manner recorded by a flow table entry of the target flow table, so as to obtain a target message. Further, the programmable device may forward the to-be-processed message to a target node referred to in the target message header.

In some embodiments, programmable device 20a also stores a filter condition at which the complete message needs to be provided for the CPU for processing. The filter condition may include: the data stream identifier of the message that needs to be completely provided for the CPU, one or more of the five tuples, a destination network address and a source network address.

Correspondingly, programmable device 20a may determine, on the basis of the data stream identifier in the message header of the to-be-processed message and the filter condition when no flow table for processing the to-be-processed message exists locally, whether it is needed to provide the complete to-be-processed message for the CPU. Optionally, if the filter condition include: a destination network address and a source network address, the programmable device may parse the message header of the to-be-processed message to obtain the destination IP address and source IP address; acquire the destination network address and source network address of the to-be-processed message from the destination IP address and source IP address; match the destination network address and source network address of the to-be-processed message with the destination network address and source network address in the filter conditions; and if matching succeeds, determine that the complete to-be-processed message needs to be provided for the CPU. Further, programmable device 20a may provide the complete to-be-processed message for the CPU for processing.

Correspondingly, if a determination result is that the complete to-be-processed message does not need to be provided for the CPU, programmable device 20a may provide the message header of the to-be-processed message for the CPU, and the CPU processes the message header of the to-be-processed message.

In some embodiments, the network device further include network interface 20c. Network interface 20c is used for forwarding messages.

Optionally, the network device may be implemented as an NIC. The NIC may also include network interface 20c and bus interface 20d. The NIC may be mounted on a host through bus interface 20d. Network interface 20c is used for receiving messages sent by other physical machines to the host and forwarding messages sent by the host.

In some embodiments, programmable device 20a is also configured to acquire transaction information of the to-be-processed message; determine a processing manner of the to-be-processed message according to the transaction information of the to-be-processed message; and if the processing manner of the to-be-processed message is implemented by a CPU and a programmable device, provide the message header of the to-be-processed message for the CPU.

Optionally, during determining a processing manner of the to-be-processed message, programmable device 20a is specifically configured to: acquire a transaction type of the to-be-processed message from the transaction information of the to-be-processed message; determine a target service grade corresponding to the transaction type of the to-be-processed message; acquire a message processing manner corresponding to the target service grade as the processing manner of the to-be-processed message; and/or acquire a transaction user identifier from the transaction information of the to-be-processed message; and acquire a message processing manner corresponding to the transaction user identifier as the processing manner of the to-be-processed message.

In some optional implementations, as shown in FIG. 2a, the network device may also include power component 20e and other optional components. **FIG. 2a** only shows some components schematically, which neither means that the network device has to include all the components shown in **FIG. 2a****,** nor means that the network device can only include the components shown in **FIG. 2a****.**

The network device provided in **FIG. 2a** can be implemented as an NIC. Correspondingly, an embodiment of the present application further provides a computer device with the above NIC. The computer device may be a desktop, a laptop, a smart phone, a tablet, a wearable device and other terminal devices, or a server, a server array and other server devices. The following is an exemplary description of the computer device provided by this embodiment of the present application.

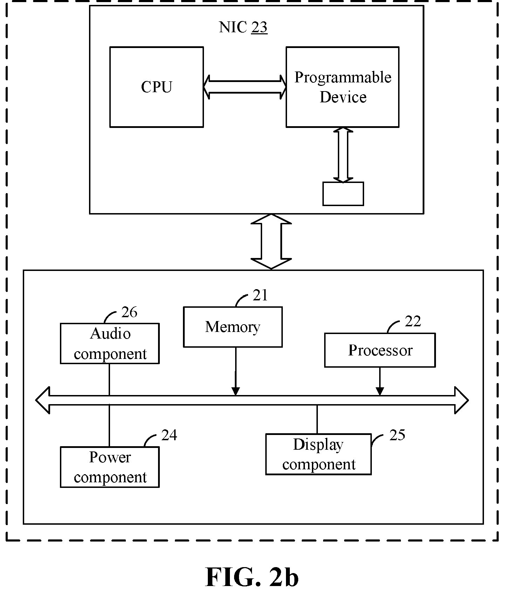

**FIG. 2b** is a schematic structural diagram of a computer device provided by an embodiment of the present application. As shown in **FIG. 2b****,** the computer device includes memory 21 and processing unit 22, and is provided with NIC 23 described above. In this embodiment, NIC 23 may be mounted on the computer device by means of a bus interface. An implementation form of the bus interface can be seen in the relevant contents of the above embodiment, and will not be repeated here.

In this embodiment, the NIC includes a CPU and a programmable device. The CPU and the programmable device are communicatively coupled.

In order to take into account the flexibility and high performance of message processing, embodiments of the present application provide a message processing manner combining software and hardware, that is, a network hardware offload scheme. A specific implementation process is as follows:

For a to-be-processed message, the programmable device may provide a message header of the to-be-processed message for the CPU. Optionally, the programmable device may provide the message header of the to-be-processed message for the CPU when no flow table for processing the to-be-processed message exists locally. In this embodiment, LOCAL refers to a storage unit of the programmable device.

The to-be-processed message refers to a message received by the programmable device. This message may be a message sent by the computer device to other physical machines, or a message sent by other physical machines and received by the computer device where the NIC is located.

The CPU of the NIC may receive the message header provided by the programmable device. In this embodiment, the CPU may process the message header to obtain a target message header. Optionally, a VS may run in the CPU of the NIC. The VS running in the CPU processes the message header to obtain the target message header. Further, the CPU may provide the target message header for the programmable device. Correspondingly, the programmable device may receive the target message header and splice the target message header with a payload portion of the to-be-processed message to obtain a target message. Further, the programmable device may forward the target message to a target node referred to in the target message header.

If the to-be-processed message is a message sent, to other physical machines, by a host where the NIC is located, the programmable device may send the target message to a network interface and forward the target message to other physical machines through the network interface. In this implementation, the target node is another physical machine.

If the to-be-processed message is a message sent by other physical machines and received by the host where the NIC is located, that is, if the to-be-processed message is a message sent by other physical machines to the host where the NIC is located and received by the network interface, the programmable device may send the target message to a VM running in the host.

In the computer device provided by this embodiment, the programmable device in the NIC of the computer device can provide, when no flow table for processing the to-be-processed message exists locally, the message header of the to-be-processed message for the CPU of the NIC for processing, and splice the message header processed by the CPU with a payload portion of the to-be-processed message to obtain the target message, so that the payload portion of the message is processed using high performance of hardware of the programmable device, and the message header can be processed using flexibility of software in the CPU to process a complicated transaction logic. Since the message header is relatively short, for example, 256 bytes, performance loss in CPU software processing due to long-message copy processing will not occur, thus facilitating improvement of network forwarding performance.

On the other hand, the CPU of the NIC processes the message header. Since software has a relatively short development cycle, it helps to meet a requirement for message forwarding flexibility and can meet the rapid iteration requirement of the cloud network.

In this embodiment of the present application, the CPU of the NIC may also generate, after or during the processing of the header of the to-be-processed message, a flow table for processing the header of the to-be-processed message. Further, the CPU may provide the flow table for processing the message header of the to-be-processed message for the programmable device.

Correspondingly, the programmable device may receive the flow table for processing the message header of the to-be-processed message and store the flow table locally. In this way, when subsequently receiving other messages belonging to the same data stream as the to-be-processed message, the programmable device may directly process other messages, thereby realizing hardware offload of message forwarding, and improving the network forwarding performance.

A message belonging to the same data stream as the to-be-processed message refers to a message with the same data stream identifier as that of the to-be-processed message. the data stream identifier may be five-tuple information of the message header. Five tuples include: a source IP address, a source port, a destination IP address, a destination port and a transport layer protocol.

Based on this, the programmable device may acquire the data stream identifier in the message header of the to-be-processed message when determining whether a flow table for processing the to-be-processed message exists locally; match the data stream identifier with locally stored flow tables; if the data stream identifier in the message header of the to-be-processed message does not exist in the locally stored flow tables, determine that no flow table for processing the to-be-processed message exists locally; if the locally stored flow tables include a flow table that matches the data stream identifier in the message header of the to-be-processed message, take the matching flow table as a target flow table; and process the to-be-processed message according to a processing manner recorded by a flow target entry of the target flow table, so as to obtain a target message. Further, the programmable device may forward the to-be-processed message to a target node referred to in the target message header.

In some embodiments, the programmable device also stores a filter condition at which the complete message needs to be provided for the CPU of the NIC for processing. The filter condition may include: the data stream identifier of the message that needs to be completely provided for the CPU of the NIC, one or more of the five tuples, a destination network address and a source network address.

Correspondingly, the programmable device may determine, on the basis of the data stream identifier in the message header of the to-be-processed message and the filter condition when no flow table for processing the to-be-processed message exists locally, whether it is needed to provide the complete to-be-processed message for the CPU. Optionally, if the filter condition include: a destination network address and a source network address, the programmable device may parse the message header of the to-be-processed message to obtain the destination **IP** address and source **IP** address; acquire the destination network address and source network address of the to-be-processed message from the destination **IP** address and source IP address; match the destination network address and source network address of the to-be-processed message with the destination network address and source network address in the filter conditions; and if matching succeeds, determine that the complete to-be-processed message needs to be provided for the CPU. Further, the programmable device may provide the complete to-be-processed message for the CPU for processing.

Correspondingly, if a determination result is that the complete to-be-processed message does not need to be provided for the CPU, the programmable device may provide the message header of the to-be-processed message for the CPU, and the CPU processes the message header of the to-be-processed message.

In some embodiments, the programmable device is also configured to acquire transaction information of the to-be-processed message; determine a processing manner of the to-be-processed message according to the transaction information of the to-be-processed message; and if the processing manner of the to-be-processed message is implemented by a CPU and a programmable device, provide the message header of the to-be-processed message for the CPU.

Optionally, during determining a processing manner of the to-be-processed message, the programmable device is specifically configured to: acquire a transaction type of the to-be-processed message from the transaction information of the to-be-processed message; determine a target service grade corresponding to the transaction type of the to-be-processed message; acquire a message processing manner corresponding to the target service grade as the processing manner of the to-be-processed message; and/or acquire a transaction user identifier from the transaction information of the to-be-processed message; and acquire a message processing manner corresponding to the transaction user identifier as the processing manner of the to-be-processed message.

In some optional implementations, as shown in **FIG. 2b**, the computer device may also include a power component 24, a display component 25, an audio component 26 and other optional components. **FIG. 2b** only shows some components schematically, which neither means that the computer device has to include all the components shown in **FIG. 2b****,** nor means that the computer device can only include the components shown in **FIG. 2b****.**

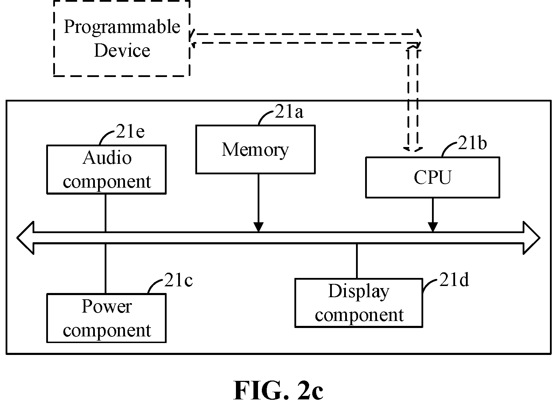

In addition to the computer device with the NIC including the CPU and the programmable device, an embodiment of the present application further provides a network device. As shown in **FIG. 2c****,** the network device includes a memory 21a and a CPU 21b. CPU 21b and the programmable device are communicatively coupled. Memory 21a is configured to store a computer program.

CPU 21b is coupled to memory 21a, and is configured to execute the computer program to: acquire a message header of a to-be-processed message provided by the programmable device communicatively coupled to CPU 21b; process the message header to obtain a target message header; and provide the target message header for the programmable device, so that the programmable device splices the target message header with a payload portion of the to-be-processed message to obtain a target message, and forwards the target message.

Optionally, CPU 21b is also configured to generate a flow table for processing the message header; and provide, for the programmable device, the flow table for processing the message header, so that the programmable device processes, on the basis of the flow table for processing the message header, other messages matching a data stream identifier of the to-be-processed message.

Optionally, the programmable device may be deployed in an NIC. The NIC may be mounted in the network device provided in this embodiment. Optionally, the NIC may be mounted in the network device provided in this embodiment by means of a bus interface.

In some optional implementations, as shown in **FIG. 2c****,** the computer device may also include a power component 21c, a display component 21d, an audio component 21e and other optional components. **FIG. 2c** only shows some components schematically, which neither means that the network device has to include all the components shown in **FIG. 2c****,** nor means that the network device can only include the components shown in **FIG. 2c****.**

The network device provided by this embodiment includes the CPU. The CPU may be communicatively coupled to the programmable device to process the message header. Since software has a relatively short development cycle, it helps to meet a requirement for message forwarding flexibility and can meet the rapid iteration requirement of the cloud network.

In this embodiment of the present application, the memory is configured to store a computer program, and may be configured to store various other data to support operations on the device where the memory is located. The processing unit may execute the computer program stored in the memory to implement corresponding control logic. The memory may be implemented by any type of volatile or non-volatile storage devices or a combination thereof, such as Static Random Access Memory (SRAM), an Electrically Erasable Programmable Read-Only Memory (EEPROM), a Programming Read-Only Memory (EPROM), a Programmable Read-Only Memory (PROM), a Read-Only Memory (ROM), a magnetic memory, a flash memory, a magnetic disk or an optical disk.

In this embodiment of the present application, the processing unit may be any hardware processing device that can execute the above method logic. Optionally, the processing unit can be, but is not limited to, a Central Processing Unit (CPU), a Graphics Processing Unit (GPU), a Microcontroller Unit (MCU), a programmable device, such as a Field-Programmable Gate Array (FPGA), a Programmable Array Logic (PAL), a General Array Logic (GAL) and a Complex Programmable Logic Device (CPLD), Advanced RISC Machines (ARM) or a System on Chip (SOC), or the like.

In this embodiment of the present application, the display component may include a Liquid Crystal Display (LCD) and a Touch Panel (TP). If it includes the TP, the display component may be implemented as a touch screen, to receive an input signal from a user. The TP includes one or more touch sensors to sense touch, swipe, and gestures on the TP. The touch sensor may not only sense a boundary of a touch or swipe action, but also detect duration and pressure related to the touch or swipe operation.

In this embodiment of the present application, the power component is configured to supply power to the various components of the device. The power component may include a power management system, one or more power supplies, and other components associated with generation, management, and distribution of power for the device including the power component.

In this embodiment of the present application, the audio component is configured to output and/or input audio signals. For example, the audio component includes a microphone (MIC), and the microphone is configured to receive an external audio signal when the electronic device is in an operation mode, such as a calling mode, a recording mode, and a voice identification mode. The received audio signal may be further stored in the memory or transmitted via the communication component. In some embodiments, the audio component further includes a speaker configured to output audio signals. For example, for devices with a language interaction function, voice interaction with users can be realized through the audio component.

In addition to the above message processing system and devices, an embodiment of the present application further provides a message processing method. The following is an exemplary example of the message processing method provided by this embodiment of the present application in view of the programmable devices and CPUs.

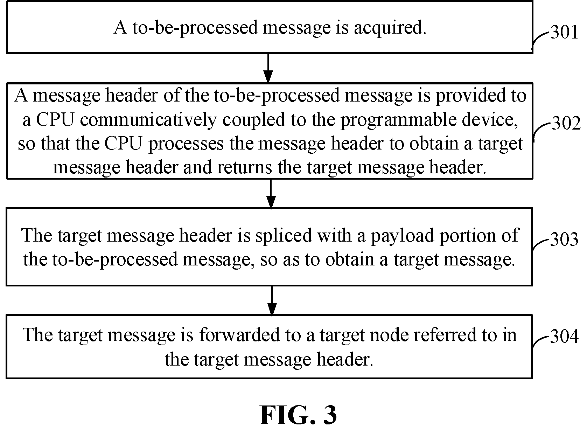

**FIG. 3** is a flow diagram of a message processing method provided by an embodiment of the present application. The method is applicable to a programmable device in an NIC. As shown in **FIG. 3****,** the method includes:
301, a to-be-processed message is acquired.
302, a message header of the to-be-processed message is provided for a central processing unit communicatively coupled to the programmable device, so that the central processing unit processes the message header to obtain a target message header and returns the same.
303, the target message header is spliced with a payload portion of the to-be-processed message, so as to obtain a target message.
304, the target message is forwarded to a target node referred to in the target message header.

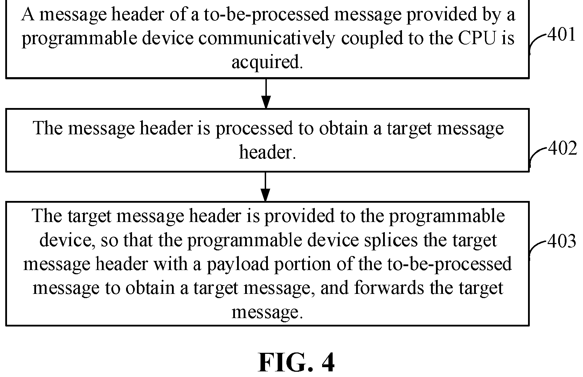

**FIG. 4** is a flow diagram of another message processing method provided by an embodiment of the present application. The method is applicable to a CPU. As shown in **FIG. 4****,** the method includes:
401, a message header of a to-be-processed message provided by a programmable device communicatively coupled to the CPU is acquired.
402, the message header is processed to obtain a target message header.
403, the target message header is provided for the programmable device, so that the programmable device splices the target message header with a payload portion of the to-be-processed message to obtain a target message, and forwards the same.

In this embodiment, implementation forms of the programmable device and the CPU can be seen in the relevant contents of the above embodiments, and will not be repeated here.

In this embodiment, in order to take into account the flexibility and high performance of message processing, embodiments of the present application provide a message processing manner combining software and hardware, that is, a network hardware offload scheme. A specific implementation process is as follows:

The programmable device may acquire the to-be-processed message in step 301. The to-be-processed message may be a message sent by a computer device to other physical machines, or may be a message sent by other physical machines and received by a computer device where the programmable device is located.

The programmable device then provides the message header of the to-be-processed message for the CPU in step 302. Optionally, the programmable device may provide the message header of the to-be-processed message for the CPU when no flow table for processing the to-be-processed message exists locally. In this embodiment, LOCAL refers to a storage unit of the programmable device.

The CPU may receive the message header provided by the programmable device in step 401. In step 402, the message header may be processed to obtain the target message header. Optionally, a VS may run in the CPU. The VS running in the CPU processes the message header to obtain the target message header. Further, in step 403, the target message header may be provided for the programmable device.

Correspondingly, the programmable device may receive the target message header and splice, in step 303, the target message header with the payload portion of the to-be-processed message to obtain the target message. Further, in step 304, the programmable device may forward the target message to the target node referred to in the target message header.

If the to-be-processed message is a message sent, to other physical machines, by a host where the programmable device is located, the programmable device may send the target message to a network interface and forward the target message to other physical machines through the network interface. In this implementation, the target node is another physical machine.

If the to-be-processed message is a message sent by other physical machines and received by the host where the programmable device is located, that is, if the to-be-processed message is a message sent by other physical machines to the host where the programmable device is located and received by the network interface, the programmable device may send the target message to a VM running in the host.

In this embodiment, the programmable device can provide the message header of the to-be-processed message for the CPU for processing, and splice the message header processed by the CPU with the payload portion of the to-be-processed message to obtain the target message, so that the payload portion of the message is processed using high performance of hardware of the programmable device, and the message header can be processed using flexibility of software in the CPU to process a complicated transaction logic. Since the message header is relatively short, for example, 256 bytes, performance loss in CPU software processing due to long-message copy processing will not occur, thus facilitating improvement of network forwarding performance.

On the other hand, the CPU processes the message header. Since software has a relatively short development cycle, it helps to meet a requirement for message forwarding flexibility and can meet the rapid iteration requirement of the cloud network.

In this embodiment of the present application, the CPU may also generate, after or during the processing of the header of the to-be-processed message, a flow table for processing the header of the to-be-processed message. Further, the CPU may provide the flow table for processing the message header of the to-be-processed message for the programmable device.

Correspondingly, the programmable device may receive the flow table for processing the message header of the to-be-processed message and store the flow table locally. In this way, the programmable device subsequently processes, on the basis of the flow table, other messages matching the data stream identifier of the to-be-processed message. Optionally, when receiving other messages belonging to the same data stream as the to-be-processed message, the programmable device may directly process other messages according to a processing manner recorded in a flow table entry of the flow table, thereby realizing hardware offload of message forwarding, and improving the network forwarding performance.

A message belonging to the same data stream as the to-be-processed message refers to a message with the same data stream identifier as that of the to-be-processed message. the data stream identifier may be five-tuple information of the message header. Five-tuple includes: a source IP address, a source port, a destination IP address, a destination port and a transport layer protocol.

Based on this, an optional implementation for determining whether a flow table for processing the to-be-processed message exists locally includes: acquiring a data stream identifier in the message header of the to-be-processed message; matching the data stream identifier with locally stored flow tables; if the data stream identifier in the message header of the to-be-processed message does not exist in the locally stored flow tables, determining that no flow table for processing the to-be-processed message exists locally; if the locally stored flow tables include a flow table that matches the data stream identifier in the message header of the to-be-processed message, taking the matching flow table as a target flow table; and processing the to-be-processed message according to a processing manner recorded by a flow table entry of the target flow table, so as to obtain a target message. Further, the programmable device may forward the to-be-processed message to a target node referred to in the target message header.

In some embodiments, the programmable device also stores a filter condition at which the complete message needs to be provided for the CPU for processing. The filter condition may include: the data stream identifier of the message that needs to be completely provided for the CPU, one or more of the five tuples, a destination network address and a source network address.

Correspondingly, the programmable device may determine, on the basis of the data stream identifier in the message header of the to-be-processed message and the filter condition when no flow table for processing the to-be-processed message exists locally, whether it is needed to provide the complete to-be-processed message for the CPU. Optionally, if the filter condition include: a destination network address and a source network address, the programmable device may parse the message header of the to-be-processed message to obtain the destination IP address and source IP address; acquire the destination network address and source network address of the to-be-processed message from the destination IP address and source IP address; match the destination network address and source network address of the to-be-processed message with the destination network address and source network address in the filter conditions; and if matching succeeds, determine that the complete to-be-processed message needs to be provided for the CPU. Further, the programmable device may provide the complete to-be-processed message for the CPU for processing.

Correspondingly, if a determination result is that the complete to-be-processed message does not need to be provided for the CPU, the programmable device may provide the message header of the to-be-processed message for the CPU, and the CPU processes the message header of the to-be-processed message.

In some embodiments, the programmable device may also be configured to acquire transaction information of the to-be-processed message; determine a processing manner of the to-be-processed message according to the transaction information of the to-be-processed message; and if the processing manner of the to-be-processed message is implemented by a CPU and a programmable device, provide the message header of the to-be-processed message for the CPU.

Optionally, the programmable device may acquire a transaction type of the to-be-processed message from the transaction information of the to-be-processed message; determine a target service grade corresponding to the transaction type of the to-be-processed message; acquire a message processing manner corresponding to the target service grade as the processing manner of the to-be-processed message; and/or acquire a transaction user identifier from the transaction information of the to-be-processed message; and acquire a message processing manner corresponding to the transaction user identifier as the processing manner of the to-be-processed message.

It should be noted that all executive agents of the various steps of the method provided by the above embodiment may be the same device, or the method is implemented by different devices. For example, an executive agent of step 401 and step 402 may be device A. For another example, an executive agent of step 401 may be device A, and an executive agent of step 402 may be device B.

In addition, some processes described in the above embodiments and accompanying drawings include a plurality of operations appearing in a specific order. However, it should be clearly understood that these operations may be executed or executed in parallel not in accordance with the order herein. The sequence numbers of the operations, such as 401 and 402, are only used to distinguish the various different operations. The sequence numbers themselves do not represent any order of execution. In addition, these processes may include more or fewer operations that may be executed in order or in parallel.

Correspondingly, an embodiment of the present application further provides a computer-readable storage medium that stores computer instructions which, when executed by one or more processors, cause the one or more processors to perform the steps in the above message processing method.

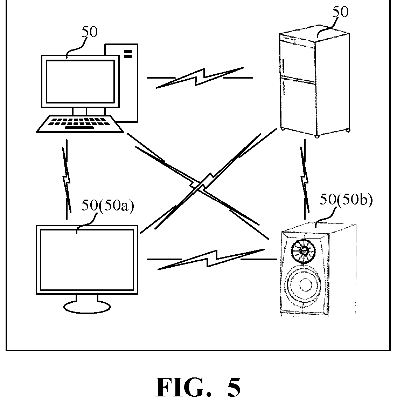

**FIG. 5** is a schematic structural diagram of a data processing system provided by an embodiment of the present application. As shown in **FIG. 5****,** the data processing system includes: multiple physical devices 50 deployed in a specified physical space. Multiple sets refer to two or more sets. Multiple physical devices 50 are in communication connection.

Multiple physical devices 50 can be connected to each other wirelessly or wirelessly. Optionally, multiple physical devices 50 can be communicatively coupled to each other through mobile network communication. Correspondingly, a network type of a mobile network can be any one of 2G (GSM), 2.5G (GPRS), 3G (WCDMA, TD-SCDMA, CDMA2000, UTMS), 4G (LTE), 4G+ (LTE+), 5G, WiMax, and the like. Optionally, multiple physical devices 50 can also be communicatively coupled to each other by Bluetooth, WiFi, infrared, and other ways.

In this embodiment, different application scenarios may lead to different implementation forms of physical devices. In the same physical scenario, physical devices can have various implementation forms. For example, in a home scenario, physical devices 50 can be, but are not limited to, at least two of a smart lock, a refrigerator, a television, a computer and a smart speaker.

In this embodiment, first physical device 50a may acquire to-be-processed data and provide at least part (defined as data A) of the to-be-processed data for other physical devices 50b. The first physical device 50a is any physical device among the multiple physical devices. Other physical devices refer to other physical devices among the multiple physical devices 50 other than the first physical device 50a. Other physical devices 50b can be one or more, which is specifically determined by processing efficiency on the to-be-processed data and a volume of the to-be-processed data.

Correspondingly, second physical device 50b that receives data A provided by first physical device 50a can process data A to obtain a data processing result; and provide the data processing result for first physical device 50a. In this embodiment, a specific processing manner for data A by second physical device 50b is not limited. Optionally, the processing manner for data A by second physical device 50b can be determined by, but is not limited to, a specific transaction requirement and/or an implementation form of data A.

For example, in some application scenarios, data A is image data. Second physical device 50b may perform image processing or image recognition on data A to determine image information. For another example, data A is audio data. Second physical device 50b can perform voice recognition on data A. For still another example, second physical device 50b can also encrypt data A and so on, but is not limited to this.

Further, second physical device 50b may provide a data processing result for first physical device 50a. First physical device 50a can determine a working mode according to the data processing result; and work according to the working mode.

The following is an exemplary description in combination with a specific embodiment. It is assumed that first physical device 50a is a television, and second physical device 50b is a smart speaker. A user can send a voice instruction to the television through voice interaction to control a working mode of the television, such as changing channels, adjusting the volume, and powering on and off. The television can acquire the voice instruction and provide the voice instruction to the smart speaker with a voice recognition function. The smart speaker performs voice recognition on the voice instruction to determine a need reflected by the voice instruction. Further, the smart speaker instructs the television to work in a working mode that meets the need reflected by the voice instruction. For example, the smart speaker can provide the need reflected by the voice instruction to the television. The television can acquire the need reflected by the voice instruction and work in the working mode that meets the need. For example, if the need reflected by the voice instruction is turning the volume up, the television can turn the volume up, or the like.

Optionally, computations supported by the multiple physical devices can be set. The computations supported by the multiple physical devices can be completed with cooperation of the multiple physical devices. For computations that are not supported by the multiple physical devices, the computations can be completed by cloud services corresponding to the multiple physical devices. If the computations are completed with the cooperation of the multiple physical devices locally, it is not necessary to transmit the to-be-processed data in a public network, which helps to improve data security and lower a leakage risk.

It should be noted that the descriptions such as "first" and "second" herein are used to distinguish different messages, devices, modules, etc., and do not represent the order, nor do they limit that "first" and "second" are different types.

Those skilled in the art should understand that the embodiments of the present application may be methods, systems or computer program products. Therefore, the present application may adopt the form of a complete hardware embodiment, a complete software embodiment, or a software and hardware combination embodiment. In addition, the present application may adopt the form of a computer program product implemented on one or multiple computer-sensitive storage media (including, but not limited to, a magnetic disk memory, a compact disc read-only memory (CD-ROM), an optical memory and the like) including computer-sensitive program codes.

The present invention is described by referring to flowcharts and/or block diagrams of methods, devices (systems) and computer program products according to the embodiments of the present application. It is worthwhile to note that computer program instructions can be used to implement each flow and/or each block in the flowcharts and/or the block diagrams and a combination of a flow and/or a block in the flowcharts and/or the block diagrams. These computer program instructions can be provided to a processor of a general-purpose computer, a special-purpose computer, an embedded processor, or another programmable data processing device to produce a machine, so that the instructions executed by the processor of the computer or another programmable data processing device produce an apparatus for realizing the functions specified in one or more flows of the flowcharts and/or one or more blocks of the block diagrams.

These computer program instructions may also be stored in a computer-readable memory that can direct a computer or another programmable data processing device to work in a specific manner, so that the instructions stored in this computer-readable memory produce an article of manufacture including an instruction apparatus which implements the functions specified in one or more flows of the flowcharts and/or one or more blocks of the block diagrams.

These computer program instructions can also be loaded onto a computer or another programmable data processing device, so that a series of operation steps are performed on the computer or another programmable device to produce computer-implemented processing, so that the instructions executed on the computer or another programmable device provide steps for implementing the functions specified in one or more flows of the flowcharts and/or one or more blocks of the block diagrams.

In one typical configuration, a computing device includes one or multiple central processing units (CPU), an input/output interface, a network interface and an internal memory.

The internal memory may include a volatile memory in a compute readable medium, a Random Access Memory (RAM) and/or a non-volatile memory, etc., such as an ROM or a flash RAM. The internal memory is an example of the computer-readable medium.

The computer-readable medium includes permanent and non-permanent, removable and non-removable media, which may implement storage of information by using any method or technology. The information can be computer-readable instructions, data structures, program modules, or other data. Examples of computer storage media include, but not limited to, a Phase-change Random Access Memory (PRAM), a Static Random Access Memory (SRAM), a Dynamic Random Access Memory (DRAM), other types of RAMs, an ROM, an Electrically Erasable Programmable Read-Only Memory (EEPROM), a flash memory or other internal memory technologies, a CD-ROM, a Digital Video Disk (DVD) or other optical memories, a magnetic cartridge type magnetic tape, a magnetic tape/disk storage device or other magnetic storage devices or any other non-transmitting media, and may be used for storing information that may be accessed by the computing device. The computer readable medium does not include transitory media, such as modulated data signals and carriers, according to definitions herein.

It is worthwhile to note that the terms "comprise", "include", or any other variation thereof are intended to cover a non-exclusive inclusion, so that a process, a method, an article, or a device that includes a list of elements includes those elements and further includes other elements not expressly listed or inherent to such a process, method, article, or device. Without more constraints, an element preceded by "includes a ...... " does not preclude the existence of additional identical elements in the process, method, product, or device that includes the element.

The above contents are only the embodiments of the present application, but not intended to limit the present application. For those skilled in the art, the present application can have various alterations and changes.

## Claims

1. A message processing method, executable by a programmable device (12), the method comprising:
acquiring (301) a to-be-processed message;
acquiring transaction information of the to-be-processed message;
determining, according to the transaction information of the to-be-processed message, a processing manner of the to-be-processed message, wherein determining the processing manner of the to-be-processed message comprises:
acquiring a transaction type of the to-be-processed message from the transaction information of the to-be-processed message,
determining a target service grade corresponding to the transaction type of the to-be-processed message, and
acquiring a message processing manner corresponding to the target service grade as the processing manner of the to-be-processed message;
in response to the processing manner of the to-be-processed message being determined as jointly processing the message by a central processing unit, CPU, and the programmable device, providing (302) a message header of the to-be-processed message to the CPU (11) communicatively coupled to the programmable device, so that the CPU processes the message header to obtain a target message header and returns the target message header to the programmable device;
splicing (303) the target message header with a payload portion of the to-be-processed message to obtain a target message; and
forwarding (304) the target message to a target node referred to in the target message header;
wherein the programmable device is a hardware processing unit that uses a hardware description language for data processing.

2. The method according to claim 1, comprising:
acquiring, from the CPU, a flow table, for processing the message header; and
locally storing the flow table.

3. The method according to claim 1 or 2, wherein providing the message header of the to-be-processed message to the CPU communicatively coupled to the programmable device comprises:
providing the message header to the CPU when no flow table for processing the to-be-processed message exists locally.

4. The method according to claim 3, comprising:
acquiring a data stream identifier in the message header;
matching the data stream identifier with locally stored flow tables;
if the data stream identifier does not exist in the locally stored flow tables, determining that no flow table for processing the to-be-processed message exists locally; and
if the locally stored flow tables comprise a flow table that matches the data stream identifier, taking the matching flow table as a target flow table, and processing the to-be-processed message according to the processing manner recorded in a flow entry of the target flow table to obtain the target message;
optionally wherein the data stream identifier is five-tuple information in the message header.

5. The method according to claim 4, wherein the programmable device stores a filter condition under which a complete message is to be provided to the CPU, the method comprising:
determining, on the basis of the data stream identifier and the filter condition, whether to provide the complete to-be-processed message to the CPU; and
if it is determined not to provide the complete to-be-processed message to the CPU, providing the message header of the to-be-processed message to the CPU.
optionally wherein the filter condition comprises at least one of one or more of data stream identifiers of a message to be completely provided to the CPU, a destination network address, or a source network address.

6. The method according to claim 5,
wherein the filter condition comprises a destination network address and a source network address; and
wherein determining whether to provide the complete to-be-processed message to the CPU comprises:
parsing the message header of the to-be-processed message to obtain a destination IP address and a source IP address,
acquiring a destination network address and a source network address of the to-be-processed message from the destination IP address and the source IP address,
matching the destination network address and the source network address of the to-be-processed message with the destination network address and the source network address in the filter condition, and
if the destination network address and the source network address of the to-be-processed message matches the destination network address and the source network address in the filter condition, providing the complete to-be-processed message to the CPU for processing.

7. The method according to any of claims 1 to 3, wherein determining, according to the transaction information of the to-be-processed message, a processing manner of the to-be-processed message further comprises:
acquiring a transaction user identifier from the transaction information of the to-be-processed message, and acquiring a message processing manner corresponding to the transaction user identifier as the processing manner of the to-be-processed message.

8. A network device, comprising a programmable device (12) communicatively coupled to a central processing unit, CPU, (11) wherein the programmable device is configured to perform the method according to any of claims 1 to 7.

9. The network device according to claim 8, wherein the CPU is deployed in the network device.

10. The network device according to claim 8 or 9, wherein the network device is a network interface card (23), a router, or a gateway.

11. A message processing system, comprising: a central processing unit, CPU, (11) and a programmable device (12) communicatively coupled to the CPU, wherein the programmable device is configured to perform the method according to any of claims 1 to 7, and wherein the CPU is configured to:
acquire (401) the message header of the to-be-processed message provided by the programmable device;
process (402) the message header to obtain the target message header; and
provide (403) the target message header to the programmable device.

12. The message processing system according to claim 11, wherein the CPU is configured to:
generate a flow table for processing the message header; and
provide, to the programmable device, the flow table for processing the message header, so that the programmable device processes, on the basis of the flow table for processing the message header, other messages matching a data stream identifier of the to-be-processed message.

13. The message processing system according to claim 11 or 12, wherein:
the programmable device is a Field-Programmable Gate Array, a Complex Programmable Logic Device, or an Application Specific Integrated Circuit; and/or
the CPU is integrated on a system-on-chip or a microcontroller unit.

14. The system according to any of claims 11 to 13, wherein:
the CPU and the programmable device are deployed on the same network device; or
the CPU and the programmable device are deployed on different network devices; or
the CPU and the programmable device are deployed in a network interface card (23), a gateway or a router; or
the CPU and the programmable device are deployed in a network interface card comprising a network interface and a bus interface, the network interface card being mounted on a host through the bus interface, and the network interface being configured to receive messages sent by other physical machines to the host, and forward a message sent by the host.

15. A computer-readable storage medium for storing computer instructions which, when executed by one or more processors, cause the one or more processors to perform the method according to any of claims 1 to 7.

## Patentansprüche

1. Nachrichtenverarbeitungsverfahren, ausführbar von einer programmierbaren Vorrichtung (12), wobei das Verfahren Folgendes umfasst:
Erfassen (301) einer zu verarbeitenden Nachricht;
Erfassen von Transaktionsinformationen der zu verarbeitenden Nachricht;
Bestimmen, gemäß den Transaktionsinformationen der zu verarbeitenden Nachricht, einer Verarbeitungsweise der zu verarbeitenden Nachricht, wobei das Bestimmen der Verarbeitungsweise der zu verarbeitenden Nachricht Folgendes umfasst:
Erfassen eines Transaktionstyps der zu verarbeitenden Nachricht anhand der Transaktionsinformationen der zu verarbeitenden Nachricht,
Bestimmen einer Ziel-Dienstklasse, die dem Transaktionstyp der zu verarbeitenden Nachricht entspricht, und
Erfassen einer Nachrichtenverarbeitungsweise, die der Ziel-Dienstklasse entspricht, als die Verarbeitungsweise der zu verarbeitenden Nachricht;
als Reaktion darauf, dass die Verarbeitungsweise der zu verarbeitenden Nachricht als ein gemeinsames Verarbeiten der Nachricht durch eine zentrale Verarbeitungseinheit, CPU, und die programmierbare Vorrichtung bestimmt wird,
Bereitstellen (302) eines Nachrichtenkopfs der zu verarbeitenden Nachricht an die CPU (11), die kommunikativ mit der programmierbaren Vorrichtung gekoppelt ist, sodass die CPU den Nachrichtenkopf verarbeitet, um einen Ziel-Nachrichtenkopf zu erlangen, und den Ziel-Nachrichtenkopf an die programmierbare Vorrichtung zurückgibt;
Spleißen (303) des Ziel-Nachrichtenkopfs mit einem Nutzlastabschnitt der zu verarbeitenden Nachricht, um eine Ziel-Nachricht zu erlangen; und
Weiterleiten (304) der Ziel-Nachricht an einen Ziel-Knoten, auf den in dem Ziel-Nachrichtenkopf verwiesen wird;
wobei die programmierbare Vorrichtung eine Hardware-Verarbeitungseinheit ist, die eine Hardware-Beschreibungssprache zur Datenverarbeitung verwendet.

2. Verfahren nach Anspruch 1, umfassend:
Erfassen, von der CPU, einer Ablauftabelle, um den Nachrichtenkopf zu verarbeiten; und
lokales Speichern der Ablauftabelle.

3. Verfahren nach Anspruch 1 oder 2, wobei ein Bereitstellen des Nachrichtenkopfs der zu verarbeitenden Nachricht an die kommunikativ mit der programmierbaren Vorrichtung gekoppelte CPU Folgendes umfasst:
Bereitstellen des Nachrichtenkopfs an die CPU, wenn lokal keine Ablauftabelle zum Verarbeiten der zu verarbeitenden Nachricht existiert.

4. Verfahren nach Anspruch 3, umfassend:
Erfassen einer Datenstromkennung in dem Nachrichtenkopf;
Abgleichen der Datenstromkennung mit lokal gespeicherten Ablauftabellen;
wenn die Datenstromkennung nicht in den lokal gespeicherten Ablauftabellen existiert, Bestimmen, dass keine Ablauftabelle zur Verarbeitung der zu verarbeitenden Nachricht lokal existiert; und
wenn die lokal gespeicherten Ablauftabellen eine Ablauftabelle umfassen, die mit der Datenstromkennung übereinstimmt, Verwenden der übereinstimmenden Ablauftabelle als Ziel-Ablauftabelle und Verarbeiten der zu verarbeitenden Nachricht gemäß der in einem Ablaufeintrag der Ziel-Ablauftabelle aufgezeichneten Verarbeitungsweise, um die Ziel-Nachricht zu erlangen;
wobei optional die Datenstromkennung 5-Tupel-Informationen in dem Nachrichtenkopf sind.

5. Verfahren nach Anspruch 4, wobei die programmierbare Vorrichtung eine Filterbedingung speichert, unter welcher der CPU eine vollständige Nachricht bereitgestellt werden soll, wobei das Verfahren Folgendes umfasst:
Bestimmen, basierend auf der Datenstromkennung und der Filterbedingung, ob der CPU die vollständige zu verarbeitende Nachricht bereitgestellt werden soll; und
wenn bestimmt wird, der CPU nicht die gesamte zu verarbeitende Meldung bereitzustellen, Bereitstellen des Nachrichtenkopfs der zu verarbeitenden Nachricht an die CPU,
wobei optional die Filterbedingung mindestens eine von einer oder mehreren Datenstromkennungen einer Nachricht, die der CPU vollständig bereitgestellt werden soll, eine Ziel-Netzadresse oder eine Quell-Netzadresse umfasst.

6. Verfahren nach Anspruch 5,
wobei die Filterbedingung eine Ziel-Netzadresse und eine Quell-Netzadresse umfasst; und
wobei das Bestimmen, ob der CPU die vollständige zu verarbeitende Nachricht bereitgestellt werden soll, Folgendes umfasst:
Analysieren des Nachrichtenkopfs der zu verarbeitenden Nachricht, um eine Ziel-IP-Adresse und eine Quell-IP-Adresse zu erlangen,
Erfassen einer Ziel-Netzadresse und einer Quell-Netzadresse der zu verarbeitenden Nachricht aus der Ziel-IP-Adresse und der Quell-IP-Adresse,
Abgleichen der Ziel-Netzadresse und der Quell-Netzadresse der zu verarbeitenden Nachricht mit der Ziel-Netzadresse und der Quell-Netzadresse in der Filterbedingung, und
wenn die Ziel-Netzadresse und die Quell-Netzadresse der zu verarbeitenden Nachricht mit der Ziel-Netzadresse und der Quell-Netzadresse in der Filterbedingung übereinstimmen, Bereitstellen der vollständigen zu verarbeitenden Nachricht an die CPU zum Verarbeiten.

7. Verfahren nach einem der Ansprüche 1 bis 3, wobei das Bestimmen, gemäß den Transaktionsinformationen der zu verarbeitenden Nachricht, einer Verarbeitungsweise der zu verarbeitenden Nachricht Folgendes umfasst:
Erfassen einer Transaktions-Benutzerkennung aus den Transaktionsinformationen der zu verarbeitenden Nachricht und Erfassen einer Nachrichtenverarbeitungsweise, die der Transaktions-Benutzerkennung entspricht, als die Verarbeitungsweise der zu verarbeitenden Nachricht.

8. Netzvorrichtung, umfassend eine programmierbare Vorrichtung (12), die kommunikativ mit einer zentralen Verarbeitungseinheit, CPU, (11) gekoppelt ist, wobei die programmierbare Vorrichtung konfiguriert ist, um das Verfahren nach einem der Ansprüche 1 bis 7 durchzuführen.

9. Netzvorrichtung nach Anspruch 8, wobei die CPU in der Netzvorrichtung eingesetzt wird.

10. Netzvorrichtung nach Anspruch 8 oder 9, wobei die Netzvorrichtung eine Netzschnittstellenkarte (23), ein Router oder ein Gateway ist.

11. Nachrichtenverarbeitungssystem, umfassend: eine zentrale Verarbeitungseinheit, CPU, (11) und eine programmierbare Vorrichtung (12), die kommunikativ mit der CPU gekoppelt ist, wobei die programmierbare Vorrichtung konfiguriert ist, um das Verfahren nach einem der Ansprüche 1 bis 7 durchzuführen, und wobei die CPU zu Folgendem konfiguriert ist:
Erfassen (401) des Nachrichtenkopfs der zu verarbeitenden Nachricht, die von der programmierbaren Vorrichtung bereitgestellt wird;
Verarbeiten (402) des Nachrichtenkopfs, um den Ziel-Nachrichtenkopf zu erlangen; und
Bereitstellen (403) des Ziel-Nachrichtenkopfs an die programmierbare Vorrichtung.

12. Nachrichtenverarbeitungssystem nach Anspruch 11, wobei die CPU zu Folgendem konfiguriert ist:
Erzeugen einer Ablauftabelle zum Verarbeiten des Nachrichtenkopfs; und
Bereitstellen, an die programmierbare Vorrichtung, der Ablauftabelle zum Verarbeiten des Nachrichtenkopfs, sodass die programmierbare Vorrichtung basierend auf der Ablauftabelle zum Verarbeiten des Nachrichtenkopfs andere Nachrichten verarbeitet, die einer Datenstromkennung der zu verarbeitenden Nachricht entsprechen.

13. Nachrichtenverarbeitungssystem nach Anspruch 11 oder 12, wobei:
die programmierbare Vorrichtung ein feldprogrammierbares Gate-Array, eine komplexe programmierbare Logikvorrichtung oder eine anwendungsspezifische integrierte Schaltung ist; und/oder
die CPU in ein System-on-Chip oder eine Mikrocontroller-Einheit integriert ist.

14. System nach einem der Ansprüche 11 bis 13, wobei:
die CPU und die programmierbare Vorrichtung auf derselben Netzvorrichtung eingesetzt werden; oder
die CPU und die programmierbare Vorrichtung auf unterschiedlichen Netzvorrichtungen eingesetzt werden; oder
die CPU und die programmierbare Vorrichtung in einer Netzschnittstellenkarte (23), einem Gateway oder einem Router eingesetzt werden; oder
die CPU und die programmierbare Vorrichtung in einer Netzschnittstellenkarte eingesetzt werden, umfassend eine Netzschnittstelle und eine Busschnittstelle, wobei die Netzschnittstellenkarte über die Busschnittstelle an einem Host montiert ist und die Netzschnittstelle konfiguriert ist, um Nachrichten zu empfangen, die von anderen physischen Maschinen an den Host gesendet werden, und eine von dem Host gesendete Nachricht weiterzuleiten.

15. Computerlesbares Speichermedium zum Speichern von Computeranweisungen, die, wenn sie von einem oder mehreren Prozessoren ausgeführt werden, den einen oder die mehreren Prozessoren veranlassen, das Verfahren nach einem der Ansprüche 1 bis 7 durchzuführen.

## Revendications

1. Procédé de traitement de messages, exécutable par un dispositif programmable (12), le procédé comprenant :
l'acquisition (301) d'un message à traiter ;
l'acquisition d'informations de transaction du message à traiter ;
la détermination, conformément aux informations de transaction du message à traiter, d'un mode de traitement du message à traiter, ladite détermination du mode de traitement du message à traiter comprenant :
l'acquisition d'un type de transaction du message à traiter à partir des informations de transaction du message à traiter,
la détermination d'un niveau de service cible correspondant au type de transaction du message à traiter, et
l'acquisition d'un mode de traitement de message correspondant au niveau de service cible en tant que mode de traitement du message à traiter ;
en réponse au fait que le mode de traitement du message à traiter est déterminé comme traitant conjointement le message par une unité centrale de traitement, CPU, et le dispositif programmable, la fourniture (302) d'un en-tête de message du message à traiter à la CPU (11) couplé en communication au dispositif programmable, de sorte que la CPU traite l'en-tête de message pour obtenir un en-tête de message cible et renvoie l'en-tête de message cible au dispositif programmable ;
l'épissage (303) de l'en-tête de message cible avec une partie de charge utile du message à traiter pour obtenir un message cible ; et
la transmission (304) du message cible à un nœud cible auquel il est fait référence dans l'en-tête de message cible ;
ledit dispositif programmable étant une unité de traitement matériel qui utilise un langage de description matériel pour le traitement de données.

2. Procédé selon la revendication 1, comprenant :
l'acquisition, à partir de la CPU, d'un tableau de flux, pour traiter l'en-tête de message ; et
le stockage local du tableau de flux.

3. Procédé selon la revendication 1 ou 2, ladite fourniture de l'en-tête de message du message à traiter à la CPU couplée en communication au dispositif programmable comprenant :
la fourniture de l'en-tête de message à la CPU lorsqu'aucun tableau de flux pour le traitement du message à traiter n'existe localement.

4. Procédé selon la revendication 3, comprenant :
l'acquisition d'un identifiant de flux de données dans l'en-tête de message ;
la mise en correspondance de l'identifiant de flux de données avec les tableaux de flux stockés localement ;
si l'identifiant de flux de données n'existe pas dans les tableaux de flux stockés localement, la détermination qu'aucun tableau de flux pour le traitement du message à traiter n'existe localement ; et
si les tableaux de flux stockés localement comprennent un tableau de flux qui correspond à l'identifiant de flux de données, la prise du tableau de flux correspondant comme tableau de flux cible, et le traitement du message à traiter conformément au mode de traitement enregistré dans une entrée de flux du tableau de flux cible pour obtenir le message cible ;
éventuellement, ledit identifiant de flux de données étant une information à cinq triplets dans l'en-tête de message.

5. Procédé selon la revendication 4, ledit dispositif programmable stockant une condition de filtre dans laquelle un message complet doit être fourni à la CPU, le procédé comprenant :
la détermination, sur la base de l'identifiant de flux de données et de la condition de filtre, de la fourniture ou non du message complet à traiter à la CPU ; et
s'il est déterminé de ne pas fournir le message complet à traiter à la CPU, la fourniture de l'en-tête de message du message à traiter à la CPU,
éventuellement, ladite condition de filtre comprend au moins l'un d'un ou de plusieurs éléments parmi les identifiants de flux de données d'un message à fournir complètement à la CPU, une adresse de réseau de destination ou une adresse de réseau source.

6. Procédé selon la revendication 5,
ladite condition de filtre comprenant une adresse de réseau de destination et une adresse de réseau source ; et
ladite détermination de la fourniture ou non du message complet à traiter à la CPU comprenant :
l'analyse syntaxique de l'en-tête de message du message à traiter pour obtenir une adresse IP de destination et une adresse IP source,
l'acquisition d'une adresse de réseau de destination et d'une adresse de réseau source du message à traiter à partir de l'adresse IP de destination et de l'adresse IP source,
la mise en correspondance de l'adresse de réseau de destination et de l'adresse de réseau source du message à traiter avec l'adresse de réseau de destination et l'adresse de réseau source dans la condition de filtre, et
si l'adresse de réseau de destination et l'adresse de réseau source du message à traiter correspondent à l'adresse de réseau de destination et à l'adresse de réseau source dans la condition de filtre, la fourniture du message complet à traiter à la CPU pour le traitement.

7. Procédé selon l'une quelconque des revendications 1 à 3, ladite détermination, conformément aux informations de transaction du message à traiter, d'un mode de traitement du message à traiter comprenant en outre :
l'acquisition d'un identifiant d'utilisateur de transaction à partir des informations de transaction du message à traiter, et l'acquisition d'un mode de traitement de message correspondant à l'identifiant d'utilisateur de transaction en tant que mode de traitement du message à traiter.

8. Dispositif de réseau, comprenant un dispositif programmable (12) couplé en communication à une unité centrale de traitement, CPU, (11), ledit dispositif programmable étant configuré pour exécuter le procédé selon l'une quelconque des revendications 1 à 7.

9. Dispositif de réseau selon la revendication 8, ladite CPU étant déployée dans le dispositif de réseau.

10. Dispositif de réseau selon la revendication 8 ou 9, ledit dispositif de réseau étant une carte d'interface de réseau (23), un routeur ou une passerelle.

11. Système de traitement de messages, comprenant : une unité centrale de traitement, CPU, (11) et un dispositif programmable (12) couplé en communication à la CPU, ledit dispositif programmable étant configuré pour exécuter le procédé selon l'une quelconque des revendications 1 à 7, et ladite CPU étant configurée pour :
acquérir (401) l'en-tête de message du message à traiter fourni par le dispositif programmable ; traiter (402) l'en-tête de message pour obtenir l'en-tête de message cible ; et
fournir (403) l'en-tête de message cible au dispositif programmable.

12. Système de traitement de message selon la revendication 11, ladite CPU étant conçue pour :
générer un tableau de flux destiné au traitement de l'en-tête de message ; et
fournir, au dispositif programmable, le tableau de flux pour le traitement de l'en-tête de message, de sorte que le dispositif programmable traite, sur la base du tableau de flux pour le traitement de l'en-tête de message, d'autres messages correspondant à un identifiant de flux de données du message à traiter.

13. Système de traitement de messages selon la revendication 11 ou 12 :
ledit dispositif programmable étant un réseau prédiffusé programmable par l'utilisateur, un dispositif logique programmable complexe ou un circuit intégré spécifique à une application ; et/ou
ladite CPU étant intégrée sur un système sur puce ou une unité de microcontrôleur.

14. Système selon l'une quelconque des revendications 11 à 13 :
ladite CPU et ledit dispositif programmable étant déployés sur le même dispositif de réseau ; ou
ladite CPU et ledit dispositif programmable étant déployés sur des dispositifs de réseau différents ; ou
ladite CPU et ledit dispositif programmable étant déployés dans une carte d'interface de réseau (23), une passerelle ou un routeur ; ou
ladite CPU et ledit dispositif programmable étant déployés dans une carte d'interface de réseau comprenant une interface de réseau et une interface de bus, ladite carte d'interface de réseau étant montée sur un hôte par l'intermédiaire de l'interface de bus, et ladite interface de réseau étant configurée pour recevoir des messages envoyés par d'autres machines physiques à l'hôte et transmettre un message envoyé par l'hôte.

15. Support de stockage lisible par ordinateur destiné à stocker des instructions informatiques qui, lorsqu'elles sont exécutées par un ou plusieurs processeurs, amènent lesdits un ou plusieurs processeurs à réaliser le procédé selon l'une quelconque des revendications 1 à 7.
